# FASCICULE DE BREVET EUROPEEN

(11) **EP 1 708 894 B1**
(45) Date de publication et mention de la délivrance du brevet: **01.07.2009**
(21) Numéro de dépôt: 05717663.8
(22) Date de dépôt: 12.01.2005
(51) Int. Cl.: B42D 15/10, B32B 38/14

(54) **PROCEDE DE FABRICATION DE CARTES PLASTIQUES**
VERFAHREN ZUR HERSTELLUNG VON KUNSTSTOFFKARTEN
METHOD FOR PRODUCING PLASTIC CARDS

(30) Priorité: 12.01.2004 FR 0450065
(43) Date de publication de la demande: 11.10.2006
(73) Titulaire: Alios, 50008 Saint-Lo Cedex (FR)
(72) Inventeur: BAISNEE, Pascal, F-50200 Coutances (FR); DUGACHARD, Lucien, F-94230 Cachan (FR)
(74) Mandataire: Novagraaf IP
(86) Numéro de dépôt international: PCT/FR2005/050016
(87) Numéro de publication internationale: WO 2005/070696

(56) Documents cités:
- EP-A- 0 113 228
- WO-A-20/04068395
- WO-A-20/04076199

## Description

La présente invention concerne le domaine de la fabrication de cartes en plastique, en particulier de cartes à micro-circuit avec ou sans fil.

On connaît dans l'état de la technique des procédés et équipements pour la production industrielle de cartes. Ces équipements sont généralement des équipements intégrés, pour la mise en oeuvre de procédés permettant la production de grandes séries de cartes.

Un procédé de ce type est connu par exemple par le document EP-A-113 228.

Ces installations sont coûteuses, et inadaptées à des productions en très petites séries, de quelques dizaines à quelques milliers de cartes. En effet, elles mettent en oeuvre un ensemble de postes de travail nécessitant un temps de calage et de réglage important à chaque changement de production.

À cet effet, l'invention concerne selon son acception la plus générale un procédé de fabrication de cartes comportant une étape d'impression graphique de feuilles de matière plastique, une étape de préparation d'au moins deux feuilles et une âme centrale, et une étape d'assemblage par laminage à chaud de l'âme centrale et des deux feuilles imprimées entre lesquelles est placée ladite âme, l'ensemble ainsi obtenu étant ensuite découpé pour former les cartes au format standard caractérisé en ce que l'étape d'impression est réalisée à l'aide d'une imprimante laser ou jet d'encre couleur sur des planches dont la dimension correspond à la réalisation de NxM cartes et est adaptée à la largeur du bac de réception d'une imprimante laser ou jet d'encre, ladite imprimante étant commandée par un fichier d'impression personnalisé identique au fichier d'impression utilisé pour l'édition de l'échantillon de validation (« Bon à tirer »).

De préférence, NxM est compris entre 21 et 24.

Avantageusement, la largeur de la planche est inférieure à 33 centimètres.

Selon un mode de réalisation préféré, la largeur de la planche est inférieure à 22 centimètres.

Selon un mode de mise en oeuvre particulier, l'étape d'impression est spécifique pour une partie au moins des cartes d'une planche.

Selon une variante, l'âme centrale est une planche intégrant des circuits avec antenne pour produire des cartes sans contact.

L'invention sera mieux comprise à la lecture de la description qui suit, se référant aux dessins annexés concernant des modes de mise en oeuvre non limitatifs de l'invention, où :

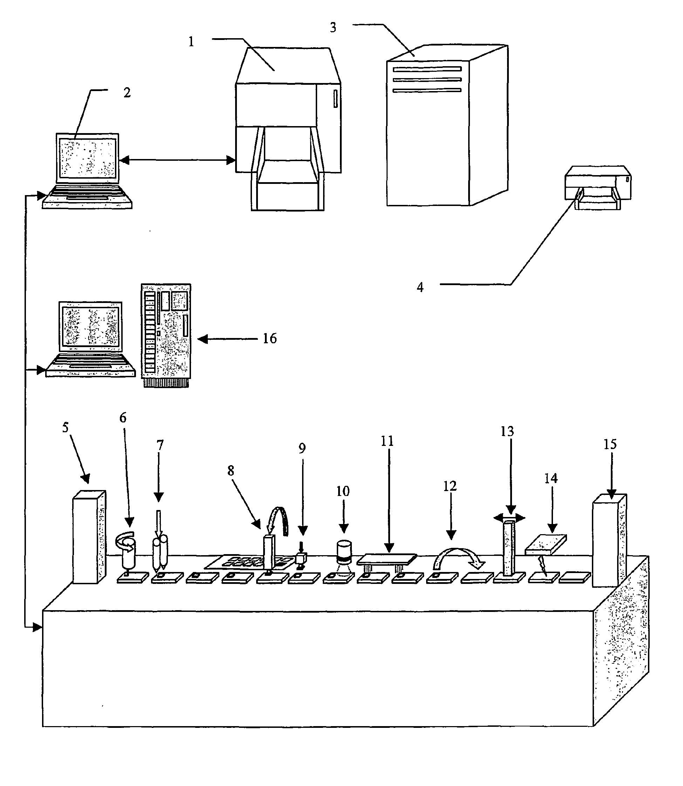

- la figure 1 représente une vue d'une installation pour la production de cartes selon l'invention.

Le procédé selon l'invention est destiné à un service de proximité, pour produire et personnaliser les cartes de différents types, avec ou sans piste magnétique:
- Cartes plastiques, de 0.30mm jusqu'à épaisseur de 0.82 ou 0.84mm ;
- Cartes sans contact ;
- Cartes avec micro-circuit ;
- Cartes « dual-interface ».

Le procédé est optimisé pour produire des petits lots de quelques cartes à 50.000 cartes par lot, avec des temps de réglage et de calage très courts, et des coûts de production optimisés.

La ligne de production complète comprend :
- des machines d'impression et de production de cartes décrite en référence à la figure 1 ;
- une machine d'encartage et de personnalisation.

La figure 1 représente une vue schématique de l'installation de fabrication de cartes selon l'invention. Elle comprend une imprimante couleur laser ou jet d'encre, non intégrée dans une chaîne de fabrication de cartes. Elle présente un bac d'alimentation de feuilles pouvant recevoir des feuilles de format A4, A3 ou A3 Wide+.

Les feuilles pour la réalisation des cartes sont des feuilles de matière plastique de 1,5 à 3/10 millimètres.

Un ordinateur (2) commande l'impression d'un fichier dont la configuration est déterminée par un logiciel de dessin assisté par ordinateur. Ce logiciel commande l'impression sous forme de 4x6 ou 3x7 ou 3x8 emplacements de cartes, par exemple, chaque emplacement pouvant recevoir une information personnalisée, par exemple un texte spécifique, ou une photographie ou un identifiant unique.

Lors de l'impression, ces données variables ou personnalisées peuvent être ajoutées spécifiquement à une ou plusieurs cartes.

Le programme générant le fichier est un programme usuel ou spécifique. Il permet dans un premier temps d'imprimer un échantillon constituant l'exemplaire sur la base duquel le client émet le « bon à tirer », puis de commander le fonctionnement de l'imprimante (1) pour l'impression des feuilles de matière plastique destinées à former le recto et le verso des cartes. Le temps de mise en service est rapide, et le rendu sera identique au bon à tirer, car celui-ci sera réalisé sur le même équipement. L'imprimante (1) est, de préférence, une imprimante standard (ou non spécifique) laser ou à jet d'encre qui permet, cependant, l'impression sur des surfaces en matière plastique (par exemple PVC, PET, ABS, polycarbonate).

Dans un mode de réalisation, l'imprimante est indépendante de la chaîne de fabrication.

Dans une variante, elle est intégrée à la chaîne de fabrication, notamment pour fournir une solution « tout-en-un ».

Ces planches formant le recto et le verso de la carte seront assemblées, avec une planche intermédiaire entre les planches recto et verso, ou avec une planche intégrant des circuits avec antenne pour produire des cartes sans contact. Cet assemblage est ensuite placé dans une presse pour une lamination à chaud.

L'installation comporte une lamineuse (3) dont la surface de la presse permet de recevoir des feuilles des mêmes dimensions que celles traitées par l'imprimante (1).

Une fois les planches laminées, nous procédons à un découpage par un équipement de découpe (4) pour obtenir des cartes au format standard ISO.

L'encartage des cartes produites selon le procédé qui précède est ensuite associé à une personnalisation des cartes dans une machine comprenant :
- un magasin d'entrée alimenté avec les cartes précédemment produites (5);
- un poste d'usinage pour former une cavité dans la carte (6);
- un poste optionnel de dépose d'une colle conductrice (7);
- un poste de dépose du module électronique (8);
- un poste de pressage du module (9);
- une caméra pour l'acquisition d'une image de la carte en cours de personnalisation (10);
- un module de chargement de micro-circuit (11), ce module réalise le chargement de données spécifiques dans le micro-circuit, permettant ainsi une personnalisation électrique de la carte ;
- un module de retournement (12);
- une tête d'impression à jet d'encre (13);
- un module de personnalisation sans contact et de test de carte sans contact (14);
- un magasin de sortie (15).

Les cartes au format ISO sont placées dans des magasins amovibles de 500 cartes.

Ces cartes sont ensuite introduites dans la machine, une à une, en vue de l'usinage d'une cavité.

Cette machine automatique fait ensuite l'usinage d'une cavité pour recevoir le micro-module avec en option un dispositif de recherche d'antenne (cas des cartes « dual interface »).

Un poste est ensuite prévu pour une dépose de colle conductrice pour le raccordement du module à l'antenne (cas d'une carte « dual interface »).

Les micro-modules préencollés (procédé « hot-melt ») sont placés sur un film super 35mm, et seront découpés au format puce avant introduction dans la cavité usinée de la carte.

Une caméra est implantée dans la chaîne de personnalisation afin d'identifier la partie personnalisée lors de l'impression (Codes barre, caractères alphanumériques ou autre ...). Ceci permet de faire un rapprochement avec les données qui seront placées dans le micro-circuit lors de la personnalisation électrique. Cette personnalisation sera faite sur les postes suivants de la machine. Cette fonction permet de personnaliser plusieurs applications différentes dans un même lot.

La machine procède ensuite à la personnalisation électrique avec des lecteurs encodeurs. Le nombre de lecteurs encodeurs peut varier et ceci en fonction du temps de chargement des micro-circuits.

Les données pour la personnalisation électrique sont dans un serveur (16), qui est raccordé au réseau local, réservé à cette ligne de production.

Après la personnalisation électrique, un poste de retournement de la carte permet d'écrire une information complémentaire sur le recto ou le verso de la carte.

Le poste d'impression à jet d'encre permet d'écrire une date, un numéro ou autre information de la carte.

Pour les cartes sans contact ou « dual-interface » un personnalisation ou un test est réalisé.

La carte est ensuite rangée dans un magasin amovible de 500 cartes ou dans un bac de rejet.

Ce bac de rejet est prévu pour recevoir les cartes reconnues défectueuses lors des différents contrôles réalisés sur les postes de la machine.

Cette ligne permet de produire les différentes familles de cartes avec le même matériel et la production de cartes sans contact lors de l'impression graphique est aussi un procédé nouveau.

Ce procédé est adapté au service de proximité et ceci de la production à la personnalisation de cartes.

## Revendications

1. Procédé de fabrication de cartes comportant une étape d'impression graphique de feuilles de matière plastique, une étape de préparation d'au moins deux feuilles et une âme centrale, et une étape d'assemblage par laminage à chaud de l'âme centrale et des deux feuilles imprimées entre lesquelles est placée ladite âme, l'ensemble ainsi obtenu étant ensuite découpé pour former les cartes au format standard **caractérisé en ce que** l'étape d'impression est réalisée à l'aide d'une imprimante laser ou jet d'encre couleur sur des planches dont la dimension correspond à la réalisation de NxM cartes et est adaptée à la largeur du bac de réception d'une imprimante laser ou jet d'encre, ladite imprimante étant commandée par un fichier d'impression personnalisé identique au fichier d'impression utilisé pour l'édition de l'échantillon de validation.

2. Procédé de fabrication de cartes selon la revendication 1, **caractérisé en ce que** NxM soit compris entre 21 et 24.

3. Procédé de fabrication de cartes selon la revendication 1, **caractérisé en ce que** la largeur de la planche est inférieure à 33 centimètres.

4. Procédé de fabrication de cartes selon la revendication 1, **caractérisé en ce que** la largeur de la planche est inférieure à 22 centimètres.

5. Procédé de fabrication de cartes selon la revendication 1, **caractérisé en ce que** l'étape d'impression est spécifique pour une partie au moins des cartes d'une planche.

6. Procédé de fabrication de cartes selon la revendication 1, **caractérisé en ce que** l'âme centrale est une planche intégrant des circuits avec antenne pour produire des cartes sans contact.

7. Procédé de fabrication de cartes selon la revendication 1, **caractérisé en ce que** ladite imprimante est une imprimante laser ou à jet d'encre non spécifique permettant l'impression sur surface de type matière plastique.

8. Procédé de fabrication de cartes selon la revendication 1, **caractérisé en ce que** ladite imprimante est indépendante de la chaîne de fabrication.

## Claims

1. A method for manufacturing cards including a step of graphic printing plastic material sheets, a step of preparing at least two sheets and a central core, and a step of assembling by hot rolling the central core and the two printed sheets between which said core is positioned, the assembly thus obtained being subsequently cut to form the cards to the standard format, **characterized in that** the step of printing is carried out using a colour laser or ink jet printing machine on plates, the dimension of which corresponds to the making of N x M cards and is adapted to the width of the reception tank of a laser or an ink jet printing machine, said printing machine being controlled by a customized printing file similar to the printing file used for editing the validation sample.

2. A method for manufacturing cards according to claim 1, **characterized in that** N x M is between 21 and 24.

3. A method for manufacturing cards according to claim 1, **characterized in that** the width of the plate is less than 33 centimetres.

4. A method for manufacturing cards according to claim 1, **characterized in that** the width of the plate is less than 22 centimetres.

5. A method for manufacturing cards according to claim 1, **characterized in that** the step of printing is specific to at least one part of the cards of a plate.

6. A method for manufacturing cards according to claim 1, **characterized in that** the central core is a plate incorporating circuits with an antenna for producing contactless cards.

7. A method for manufacturing cards according to claim 1, **characterized in that** said printing machine is a non specific laser or ink jet printing machine making it possible to print on a surface of the plastic material type.

8. A method for manufacturing cards according to claim 1, **characterized in that** said printing machine is independent of the production line.

## Patentansprüche

1. Kartenherstellungsverfahren mit einer graphischen Druckstufe für Bögen aus Plastikmaterial, einer Vorbereitungsstufe von wenigstens zwei Bögen und einem zentralen Kern und einer Montagestufe per Warmwalzen des zentralen Kerns und zwei gedruckten Bögen, zwischen denen der genannte Kern platziert ist, wobei die auf diese Weise erhaltene Struktur anschließend ausgeschnitten wird, um die Karten im Standardformat zu erhalten, **dadurch gekennzeichnet, dass** die Druckstufe mithilfe eines Farblaser- oder Farbtintenstrahldruckers auf Druckmodellen realisiert wird, deren Abmessung der Realisierung von NxM Karten entspricht und an die Breite des Auffangkastens eines Laser- oder Tintenstrahldruckers angepasst ist, wobei der genannte Drucker durch eine personalisierte Druckdatei gesteuert wird, die mit der Druckdatei identisch ist, die für die Druckanordnung des Validierungsmusters herangezogen wird.

2. Kartenherstellungsverfahren gemäß Anspruch 1, **dadurch gekennzeichnet, dass** NxM zwischen 21 und 24 inbegriffen ist.

3. Kartenherstellungsverfahren gemäß Anspruch 1, **dadurch gekennzeichnet, dass** die Breite des Druckmodells geringer ist als 33 Zentimeter.

4. Kartenherstellungsverfahren gemäß Anspruch 1, **dadurch gekennzeichnet, dass** die Breite des Druckmodells geringer ist als 22 Zentimeter.

5. Kartenherstellungsverfahren gemäß Anspruch 1, **dadurch gekennzeichnet, dass** die Druckstufe für wenigstens einen Teil der Karten eines Druckmodells spezifisch ist.

6. Kartenherstellungsverfahren gemäß Anspruch 1, **dadurch gekennzeichnet, dass** der zentrale Kern ein Druckmodell ist, das Schaltkreise mit Antenne integriert, um Karten ohne Kontakt zu produzieren.

7. Kartenherstellungsverfahren gemäß Anspruch 1, **dadurch gekennzeichnet, dass** der genannte Drucker ein nicht spezifischer Laser- oder Tintenstrahldrucker ist, der den Druck auf einer Fläche von dem Typ aus Plastikmaterial erlaubt.

8. Kartenherstellungsverfahren gemäß Anspruch 1, **dadurch gekennzeichnet, dass** der genannte Drucker von der Herstellungskette unabhängig ist.
